# EUROPEAN PATENT SPECIFICATION

(11) **EP 1 843 141 B1**
(45) Date of publication and mention of the grant of the patent: **23.06.2010**
(21) Application number: 07013891.2
(22) Date of filing: 01.03.2002
(51) Int. Cl.: G01M 3/26, G01M 3/20, G01M 3/00, F04B 51/00, G08B 21/00, F04B 1/04, F04B 43/00, F04B 49/06

(54) **Methods and apparatus for determining the presence or absence of a fluid leak**
Verfahren und Vorrichtung zur Bestimmung des Vorliegens oder Nichtvorliegens eines Flüssigkeitslecks
Procédés et appareil pour déterminer la présence ou l'absence d'une fuite de liquide

(30) Priority: 02.03.2001 US 272934 P
(43) Date of publication of application: 10.10.2007
(62) Divisional of application: 02717535.5
(73) Proprietor: Waters Technologies Corporation, Milford, MA 01757 (US)
(72) Inventor: Luongo, Joseph A., Walpole MA 02081 (US); Ciavarini, Steven J., Bellingham MA 02019 (US); Tacconi, Robert Q., Medfield MA 02052 (US); Rubino, Frank A., North Attleboro, MA 02760 (US); Dumas, Robert J., Upton, MA 01568 (US)
(74) Representative: Vossius, Corinna

(56) References cited:
- NL-C- 1 006 954
- US-A- 4 927 411
- US-A- 5 336 053

## Description

### FIELD OF THE INVENTION

This invention relates to analytical and diagnostic instruments in which a pump induces a flow of fluid. Embodiments of the present method and apparatus determine the presence or absence of a leak by placing a fluid under pressure by operating a pump and measuring the pressure in a conduit over time. The decay of the pressure over time is compared to a predetermined rate of decay. A rate of decay greater than the threshold value suggests a leak in the hydraulic components under pressure including conduits, fittings, seals, valves or pump components. The measurement of decay over time can be compared to the threshold value or dynamic threshold values as the instrument is operated. Embodiments of the present invention have special application with respect to multi-chambered pumps. Each pump chamber can be used to place a fluid under pressure with different conduits, valves and seals.

### BACKGROUND OF THE INVENTION

By way of background, the following terms will be used in this application with the meaning ascribed thereto.

The term "component defect" is used to mean that the apparatus can not attain or maintain a normal set point. In the context of a pump, a common component defect is often a leak but also encompasses the failure of sensing devices such as transducers or computing devices. As used herein, the term "leak" refers to a hole, crack or opening through which fluid escapes in a manner not intended by the user. The leak may be totally internal. That is, the fluid escapes from an area of high pressure to an area of low pressure within the apparatus. Or, such leak may be external, allowing fluid to escape from the confines of the hydraulic circuit. Leaking flammable fluids represent a safety concern, the detection of which would be very useful.

The term "solution failure" is used to suggest an absence of fluid, gases in solution or a partial filling of the pump assembly with fluid.

A "pump" is a mechanical device for moving fluids. Embodiments of the present invention have particular application to high pressure pumps used in analysis and diagnostics. By way of example, without limitation, pumps used in high performance - liquid chromatography are capable of placing a fluid under as much as 69000 KPa (10,000 psi). Such pumps can be single chamber pumps or multi-chambered pumps. One common multi-chambered pump is a serial pump in which a plurality of, usually two, pumping chambers are placed in series. That is, the flow of fluid first passes through a first pump chamber and then a second pump chamber. Another common multi-chambered pump is a parallel pump in which a plurality of, usually two, pumping chambers are placed in parallel. That is, fluid is received by a first chamber, which chamber brings the fluid to pressure and propels such fluid downstream without involving a further pump chamber. As the first pump chamber is exhausted, a second pump chamber starts to propel fluid. Parallel pumps are often equipped with rotary valves which control the outflow of the plurality of pump chambers.

As used herein, the term "control means" means control circuitry and /or computer programmable unit (CPU).

As used herein, "pressure measuring device" comprise any device for measuring pressure, including strain gauges and pressure transducers.

Valves are devices for closing, opening or directing fluid flow. Typical valves include such mechanical check valves and active valves. Mechanical check valves are responsive to pressure. Active valves receive a signal which directs power means, such as motors, solenoids and the like, to open or close the valve. Cycling valves are capable of selectively opening and closing the flow of fluid from one or more sources or directing the flow to one or more destinations. Cycling valves are used in parallel pumps to alternate the outlet flow from multiple pump chambers.

Current techniques require manual intervention to determine the integrity of a hydraulic system. It would be advantageous to have methods and apparatus capable performing operations which determine the presence or absence of a leak in a hydraulic system under pressure. Such methods and apparatus would be able to ascertain a problem in a system and alert the operator, or shut the operation down until the problem can be remedied.

US 5,336,053 discloses a method of testing a pumping system. A pump cassette effects pressurization of the system with subsequent monitoring of any pressure loss in the system. Pressure measurements are taken before and after a specified time interval with any significant pressure loss indicating system leakage. Furthermore, a disposable fluid infusion pumping chamber cassette adapted for leak detection monitoring is disclosed in US 4,927,411.

The above prior art documents describe single chamber pumps used to prepare intravenous bags for medical applications. Consequently, these conventional pumps operate at much lower pressures than chromatographic pumps and are not suited for providing a continuous constant flow of pressurized fluid for chromatographic operations.

### SUMMARY OF THE INVENTION

Embodiments of the present invention feature methods and apparatus which facilitate the detection of leaks, solution failures and poor performance of various components of a pump. One embodiment of the present invention is a pumping apparatus for pumping fluid according to claim 1.

A further embodiment of the present invention features a method of testing the performance of a pumping apparatus for pumping fluid according to claim 6.

Preferred embodiments are defined in the dependent claims.

Further features and advantages of the present invention will be apparent upon reading the detailed description which follows and viewing the drawings that are described in summary form below.

### Brief Description of the Drawings

Figure 1 depicts a single chamber pump apparatus not covered by the present invention;
Figure 2 depicts a dual chamber series pump apparatus not covered by the present invention;
Figure 3 depicts a dual chamber parallel pump apparatus embodying features of the present invention; and,
Figure 4 graphically depicts a pressure plot from a pressure measuring device over time and threshold value.

### DETAILED DESCRIPTION

Embodiments of the present invention feature methods and apparatus which facilitate the detection of leaks and poor performance of various components of a pump. One embodiment of the present invention is a pumping apparatus for pumping fluid. However, embodiments of the present invention have applications in all fluid application in which information regarding the integrity of seals and fittings and the like is desirable. Thus, the present detailed description should be construed as an exemplification of the invention and not limiting the invention to the details provided.

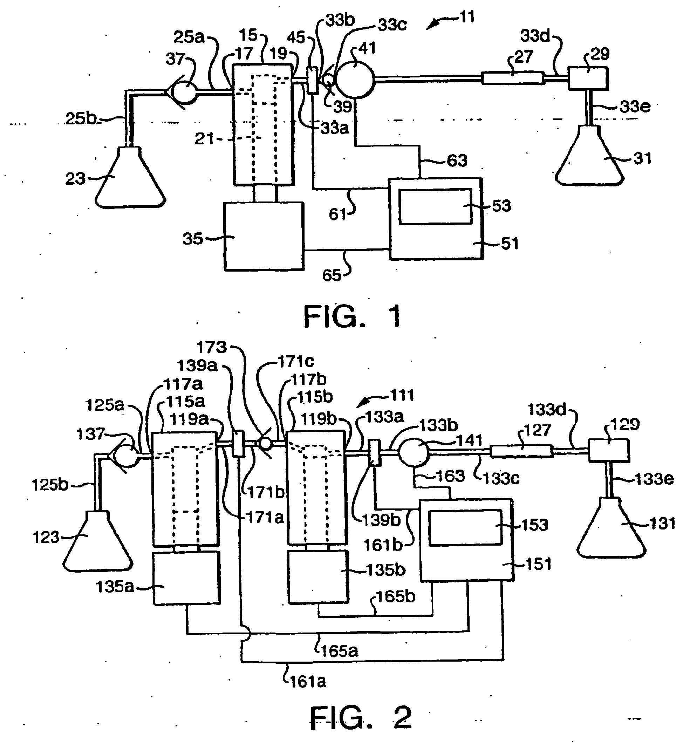

Turning now to Figure 1, a pumping apparatus (not covered by the present invention), generally designated by the numeral 11, is illustrated. Pumping apparatus is of the type normally associated with chromatographic applications. The pumping apparatus 11 has one pumping chamber 15 having an inlet 17 and an outlet 19. The pumping chamber 15 has a piston 21 for movement in the chamber 15. Piston 21 propels the fluid from the chamber. The inlet 17 is for receiving fluid from a fluid supply 23 through conduits 25a and 25b. The outlet 19 is for discharging the fluid from the chamber to a downstream chromatographic column 27, a detector 29 and a waste receptacle 31 via conduits 33a, 33b, 33c, 33d and 33e.

A motor 35 powers the piston 21 in the pumping chamber 15 through any number of mechanical devices, such as cams or spindle drives [not shown] known in the art. The motor 35 operates in pumping mode upon receiving a pumping signal.

Inlet valve 37 is in fluid communication with the inlet 17 of the pumping chamber 15 by a suitable conduit 25a or by incorporation into the pump head [not shown]. The inlet valve 37 has an open position and a closed position. Preferably, the apparatus 11 further comprises a check valve 39 in fluid communication with the pump chamber 15 downstream of the pump chamber 15. Inlet valve 37 and check valve 39 may be of standard design and features and are available from a number of vendors.

A switchable valve 41 is in fluid communication with the outlet 19 of the pumping chamber 15. The switchable valve 41 has a closed position and an open position. The switchable valve 41 assumes a closed position upon receiving a close signal. Switchable valve 41 may be solenoid controlled or a powered rotating valve. A suitable valve is a multi-position valve sold by Valco Instruments Co. Inc. (Houston, Texas USA).

A pressure measuring device 45 is in fluid communication with the pumping chamber 15, between the inlet valve 37 and switchable valve 41. The pressure measuring device 45 is, preferably, a pressure transducer which produces a pressure signal in response to pressure. A suitable pressure transducer is a tranducer sold by DJ Instruments (Billerica, Massachusetts USA)

The apparatus 11 further comprises control means 51 for receiving the pressure signal via line 61, for sending a close signal to the switchable valve 41 via line 63 and for sending a pumping signal to the motor 35 via line 65. The control means 51 is preferably a computer equipped with an operator interface such as monitor or display 53. Suitable computers are available from numerous vendors and include such personal computers having an IBM format or Apple operating system.

The apparatus 11 has a test mode in which the control means 51 sends a pumping signal to the motor 35, sends a close signal to the switchable valve 41 to cause the fluid in the pump chamber 15 to be placed under a pressure. The pressure measuring device 45 determines at least one minimal pressure and sends a minimal pressure signal to the control means 51. Preferably, the control means 51 compares the minimal pressure with a minimal acceptable value. The minimal acceptable value represents a value which is related to acceptable pump performance. Failure to attain such minimal acceptable value suggests a defect in the pump. For a chromatographic pump, such minimal acceptable value may be set at a value from 345 to 34500 KPa (50 psig to 5000 psig) or some other value appropriate for the application for which the pump will be used. A preferred value is between 1380 to 3450 KPa (200 and 500 psig). The time in which the minimal pressure may be determined corresponds to a predetermined stroke position which normal operation will give a value equal or above the minimal acceptable value.

The pressure measuring device 45 determines at least one first threshold pressure at a first time and at least one second pressure at a second time. The first and second time are chosen for a period of time in which the normal pressure decay rate is approximately linear. That is, pressure decay in a normal pump typically is exponential, with the greatest loss of pressure soon after the maximum pressure is attained and falling more steadily thereafter.

The pressure measuring device 45 sends a first threshold pressure signal and sends a second threshold pressure signal to the control means 51. The control means 51 calculates the slope of a line representing the difference of the first pressure signal and the second pressure signal over time and compares the slope with a threshold decay value. The threshold decay value represents a defect in the pump apparatus 11, most likely attributable to a leak. The threshold decay value is preferably determined empirically based upon values and times known to be a characteristic of pump apparatus 11 with acceptable performance. For a parallel pump, used in preparative chromatography applications, a threshold decay value of 690 to 2760 KPa (100 to 400 psig) per minute is preferred. The time between the first and second pressure signal is, preferably, between 0.05 to 3.0 minutes and most preferably, 0.2 to 1.0 minute. In a parallel pump, the period after the maximum pressure is attained and the first threshold pressure is taken is approximately 0.5 to 1.5 minute.

The control means 51 sends one or more error messages to display 53 to the operator in response to the slope exceeding the threshold decay value. In the alternative or in addition, the control means 51 may turn the apparatus off or place it on stand by status until the control means 51 is reset or repairs made on the apparatus 11.

Preferably, the apparatus 11 has a start up mode in which the control means 51 is turned on and the control means 51 engages the test mode to test for leaks. Software controls to effect the comparisons between test values and predetermined values, to provide error messages and/or stop equipment functions are designed to be consistent with the control circuitry and underlying software of the equipment. These software, controls, as described herein, are within the skill of competent software engineers.

The apparatus 11, in test mode, preferably performs a dynamic evaluation of the leak. Control means 51 directs motor 35 to pump fluid at constant pressure. In the event motor 35 is a stepper motor or the piston 21 is equipped with a position sensor [not shown], the steps or position are tracked over time and the volume of the leak is determined by the control means 51.

In operation, the operator starts the apparatus by activating an "on" switch or booting the control means 51. At start up, the control means 51 initiates a test mode. The control means 51 sends a pumping signal to the motor 35, sends a close signal to the switchable valve 41 to cause the fluid in the chamber to be placed under a pressure. The pressure measuring device 45 determines a minimal pressure at a first time and sends a minimal pressure signal to the control means 51. Preferably, the control means 51 compares the minimal pressure with a minimal acceptable value. The minimal acceptable value represents a value which is related to acceptable pump performance. Failure to attain such minimal acceptable value suggests a defect in the pump or solution failure.

The pressure measuring device 45 determines at least one first threshold pressure at a first time and a second threshold pressure at a second time. The pressure measuring device sends a first threshold pressure signal and a second threshold pressure signal to the control means 51. The control means 51 calculates the slope of a line representing the difference of the first threshold pressure signal and the second threshold pressure signal over time and compares the slope with a threshold decay value, representing a defect in the apparatus 11 most likely associated with a leak. The control means 51 sends one or more error messages to the operator in response to the slope exceeding the threshold decay value. The defect or leak may further be characterized by control means which directs the motor 35 in a manner of constant pressure by monitoring the pressure via a feed back from the pressure measuring device 45.

Embodiments of the apparatus, as covered by the present invention, have more than one pumping chamber. One apparatus, which, however is not covered by the present invention, further comprises two pump chambers, a first pump chamber and a second pump chamber in series. Such a series pump apparatus is generally depicted in Figure 2, by reference number 111. Serial apparatus 111 has a first pump chamber 115a having an inlet 117a and outlet 119a. First pump chamber 115a receives fluid from a fluid supply 123 via conduits 125a and 125b through an inlet check valve 137. Serial pump 111 has a second pump chamber 115b having an inlet 117b and outlet 119b. First pump chamber 115a is in fluid communication with the second pump chamber 115b via conduits 171a, 171b and 171c. Check valve 173 is in fluid communication with the first pump chamber 115a and the second pump chamber 115b.

The second pump chamber 115b discharges fluid to the switchable valve 141 via conduits 133a and 133b. Conduits 133c, 133d and 133e connect switchable valve 141 to chromatography column 127, detector 129 and waste receptacle 131.

A first pressure measuring device 139a is in fluid communication with first pump chamber 115a interposed between such chamber and check valve 173. A second pressure measuring device 139b is in fluid communication with the second pump chamber 115b interposed between such chamber and the switchable valve 141.

The apparatus 111 has two motors, a first motor 135a mechanically linked to the first pump chamber 115a and a second motor 135b mechanically linked to the second pump chamber 115b.

The apparatus 111 further comprises control means 151 for receiving the pressure signals via lines 161a and 161b, for sending a close signal to the switchable valve 141 via line 163 and for sending a pumping signal to the motors 135a and 135b via lines 165a and 165b. The control means 151 is preferably a computer equipped with a monitor or display 153. And, in the test mode, the control means 151 sends a signal to the first motor 135a and second motor 135b.

In the test mode, the control means 151 sends a pumping signal to the second motor 135b, sends a close signal to the switchable valve 141 to cause the fluid in the second pump chamber 115b to be placed under a pressure. The second pressure measuring device 139b determines a minimal pressure and sends a minimal pressure signal to the control means. The control means 151 compares the minimal pressure with a minimal acceptable value. The minimal acceptable value represents a value which is related to acceptable pump performance. Failure to attain such minimal acceptable value suggests a defect in the pump 11 or solution failure.

The second pressure measuring device 139b determines at least one first threshold pressure at a first time and at least one second threshold pressure at a second time. The second pressure measuring device 139b sends a first threshold pressure signal and a second threshold pressure signal to the control means 151. The control means 151 calculates the slope of a line representing the difference of the first threshold pressure signal and the second threshold pressure signal over time and compares the slope with a threshold decay value, where the threshold decay value represents a defect, most likely associated with a leak, in the pump 111. The control means 151 sends one or more error messages to the operator in response to the slope exceeding the threshold decay value or failure to attain the mininmal acceptable value indicating one or more defects in the pump 111, such as, leaks in the check valve 171b or the pump apparatus 111 in fluid communication with the second pump chamber 115b under pressure.

In the test mode, the control means 151 sends a pumping signal to the first motor 135a, sends a close signal to the switchable valve 141 to cause the fluid in the first pump chamber 115a to be placed under a pressure. The first pressure measuring device 139a determines a minimal pressure and sends a first minimal pressure signal to the control means 151. The control means 151 compares the minimal pressure with a minimal acceptable value. The minimal acceptable value represents a value which is related to acceptable pump performance. Failure to attain such minimal acceptable value suggests a defect in the pump or solution failure.

The first pressure measuring device 139a determines at least one second pressure at a second time and sends a second pressure signal to the control means 151. The control means 151 calculates the slope of a line representing the difference of the first pressure signal and the second pressure signal over time and compares the slope with a threshold decay value. The threshold decay value represents a defect, most likely associated with a leak in the pump 111. The control means 151 sends one or more error messages to the operator in response to the slope exceeding the threshold decay value indicating one or more defects in the pump 111, such as, leaks in the inlet valve 127 or the pump apparatus 111 in fluid communication with the first pump chamber 115a under pressure.

The control means 151 receives a first set of pressure values from the first pressure measuring device 139a and a second set of pressure values form the second pressure measuring device 139b and compares the values to determine errors in the performance of the pressure measuring devices or leaks in the apparatus 111.

In operation, in the test mode, the control means 151 sends a pumping signal to the second motor 135b, sends a close signal to the switchable valve 141 to cause the fluid in the second chamber 115b to be placed under a pressure. The second pressure measuring device 139b determines a minimal pressure and sends a first pressure signal to the control means151. The control means 151 compares the minimal pressure with a minimal acceptable value. The minimal acceptable value represents a value which is related to acceptable pump performance. Failure to attain such minimal acceptable value suggests a defect in the pump.

The second pressure measuring device 139b determines at least one first threshold pressure at a first time and at least one second threshold pressure at a second time. The first pressure measuring device 139b sends a first threshold pressure signal and a second threshold pressure signal to the control means 151. The control means 151 calculates the slope of a line representing the difference of the first pressure signal and the second pressure signal over time and compares the slope with a threshold decay value, representing a defect, most likely associated with a leak in the pump 111. The control means 151 sends one or more error messages to the operator in response to the slope exceeding the threshold value or indicating one or more leaks in the check valve 171b or the pump apparatus 111 in fluid communication with the second pump chamber 115b under pressure.

In the test mode, the control means 151 sends a pumping signal to the first motor 135a, and sends a close signal to the switchable valve 141 to cause the fluid in the first chamber 115a to be placed under a pressure. The first pressure measuring device 139a determines a minimal pressure and sends a minimal pressure signal to the control means 151. The control means 151 compares the first pressure with a minimal acceptable value. The minimal acceptable value represents a value which is related to acceptable pump performance. Failure to attain such minimal acceptable value suggests a defect in the pump or solution failure.

The first pressure measuring device 139a determines at least one first threshold pressure at a first time and at least one second threshold pressure at a second time. The first pressure measuring device 139a sends a first threshold pressure signal and a second threshold pressure signal to the control means 151. The control means 151 calculates the slope of a line representing the difference of the first pressure signal and the second pressure signal over time and compares the slope with a threshold decay value, representing a defect, most likely associated with a leak in the pump. The control means 151 sends one or more error messages to the operator in response to the slope exceeding the threshold value or a failure to attain the minimal acceptable value, indicating one or more defect in the pump 111, such as, leaks in the inlet valve 127 or the pump apparatus 111 in fluid communication with the first pump chamber 115a under pressure.

The control means 151 receives a first set of pressure values from the first pressure measuring device 139a and a second set of pressure values form the second pressure measuring device 139b and compares the values to determine errors in the performance of the pressure measuring devices 139a and 139b or leaks in the apparatus 111.

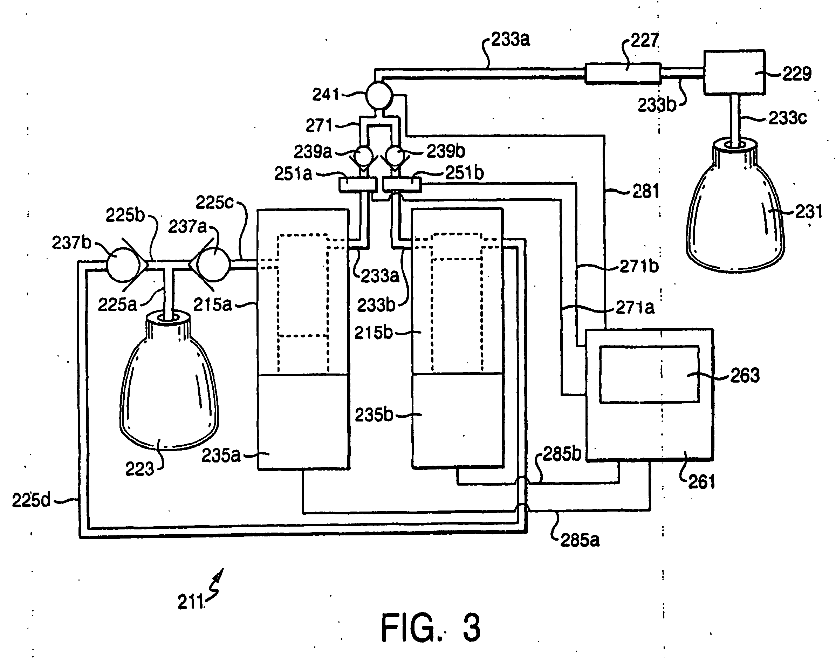

Embodiments of the present invention are useful in pumps in a parallel configuration. Figure 3 depicts a pumping apparatus, generally designated by the numeral 211, of the parallel type. The pumping apparatus 211 has two pump chambers in parallel, a first pump chamber 215a and a second pump chamber 215b. The first pump chamber 215a receives fluid from a fluid supply 223 via a first inlet valve 237a and conduits 225a, 225b and 225c. The second pump chamber 215b receives fluid from fluid supply 223 via a second inlet valve 237b via conduits 225a, 225b and 225d. The first pumping chamber 215a discharges fluid via a first outlet check valve 239a and via conduit 233a- The second pumping chamber 215b discharges fluid via a second outlet check valve 239b via conduit 233b. The first outlet check valve 239a and the second outlet check valve 239b are in fluid communication with the switchable valve 241 via conduits 271 which form a "T". From the switchable valve, fluid flows to a chromatographic column 227,detector 229 and a waste receptacle 231 through conduits 233a, 233b and 233c.

As depicted, the apparatus 211 further comprises two pressure measuring devices 251a and 251b and two motors 235a and 235b. The motors comprise a first motor 235a mechanically linked to the first pump chamber 215a and a second motor 235b mechanically linked to the second pump chamber215b. The two pressure measuring devices comprise a first pressure measuring device 251 a and a second pressure measuring device251b. The first pressure measuring device 251 a is interposed in fluid communication between the first pumping chamber 215a and the first check valve 239a. The second pressure measuring device 25 1b is interposed in fluid communication between the second pumping chamber 215b and the second check valve 239b. The two pressure measuring devices 251a and 251b allow the first pump chamber 215a and the second pump chamber 215b to be placed in test mode independent of each other.

The apparatus 211 further comprises control means 261 for receiving the pressure signals via lines 271 a and 271 b, for sending a close signal to the switchable valve 241 via line 281 and for sending a pumping signal to the motors 235a and 235b via lines 285a and 285b. The control means 261 is preferably a computer equipped with a monitor or display 263.

In the test mode, the control means 261 directs one of the motors 235a or 235b to go into pumping mode which places one of the first or second pump chamber 215a or 215b under pressure and such apparatus in fluid communication with the pump chamber under pressure through to the opposite check valve 239a or 239b. In this manner, the outlet check valve of the opposite pump chamber can be tested in a parallel pump. And, of course, in the test mode, first one motor of one pump chamber is placed in pump mode and then the opposite motor of the opposite pump chamber is placed in pump mode to allow testing of both outlet check valves 239a or 239b.

Preferably, the control means receives a first set of pressure values from the first pressure measuring device 25 1 a and a second set of pressure values from the second pressure measuring device 251b and compares the values. Differences in the values suggest errors in the performance of the pressure measuring devices, the first or second pump chambers 215a or 215b, the first and second inlet valves 237a or 237b or the outlet check valves 239a or 239b, These values can also be compared to predetermined minimal acceptable values. Where the test values comprise a first pressure and a second pressure reading separated by time, the test values are compared to threshold decay values as described previously.

In operation, in the test mode, the control means 261 directs one of the motors 235a or 235b to go into pumping mode which places one of the first or second pump chamber 215a or 215b under pressure and such apparatus in fluid communication with the pump chamber under pressure through the opposite check valve 239a or 239b. The test mode allows testing of the outlet check valve of the opposite pump chamber. And, in the test mode first one motor of one pump chamber is placed in pump mode and then the opposite motor of the opposite pump chamber is placed in pump mode to allow testing of both outlet check valves.

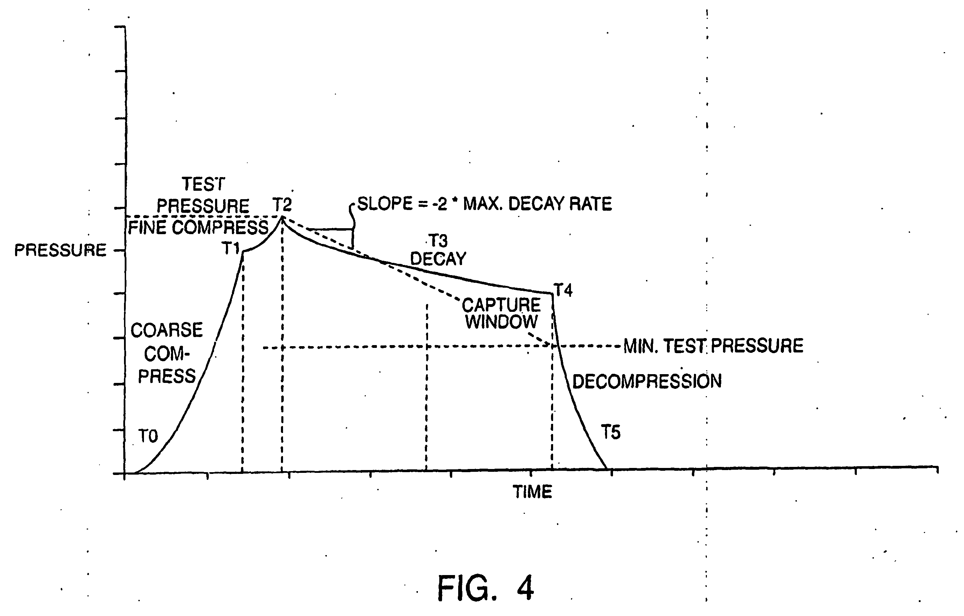

Turning now to Figure 4, such figure depicts the functional behavior of a test mode of one half of the hydraulic circuit of a parallel pump, measuring pressure over time. During the period T₀ to T₁ the control means 261 switches switchable valve 141 to close, directs one of the motors 235a or 23 5b to go into pumping mode which places one of the first or second pump chamber 215a or 215b under pressure and such apparatus in fluid communication with the pump chamber under pressure through to the opposite check valve 239a or 239b.

The period T₀ to Tⱼ is a period of course compression. The purpose of the course compression is to quickly bring the hydraulic circuit to approximately the pressure at which the pump will operate or the minimal acceptable pressure. Following the period of course compression, the control means 261 directs the motor to go into a pumping mode that is more tightly controlled. This period between T₁ and T₂, a period of fine compression is intended to bring the system to at least a minimal acceptable pressure. A pressure value from the first pressure measuring device 25 a or from the second pressure measuring device 251b is obtained at or about T₂. Control means 261 compares the value to a minimal acceptable value. Failure to attain this value during the period T₁ and T₂ suggests a defect in the pump 111.

During the period T₂ to T₄ the control means 261 directs the motors 235 a or 235b to remain static. Typically, this period is approximately 0.1 to 5 minutes, and, most preferably, 0.2 to 1.0 minutes. At T₃ a further threshold pressure value is obtained from the first pressure measuring device 251 a or from the second pressure measuring device 251b. And, at T₄ a further threshold pressure value is obtained. Control means 261 calculates the slope of a line between the pressure values taken at T₃ and T₄. If the pressure values are taken continuous over such period, the values assume a curve sloping downward, representing a typical decay of pressure over time. In the event a leak was present, the curve would assume a more distinct downward slope. The value at T₃ and T₄ would be substantially lower than depicted. The slope of the calculated line is compared to the threshold decay value represented by the dotted line extending between T₂ and T₄. This slope is illustrated for discussion purposes with the actual value being determined empirically. If the slope of the calculated line greater than the threshold value, control means 261 sends an error message.

Having completed the test, if acceptable values are achieved the pump 111 can assume normal pumping operation. To enter pumping mode, during the period T₃ to T₄, the control means 261 depressurizes the hydraulic circuit by backing off the pistons or by switching the switchable valve 141 to open.

The profile depicted in Figure 4 corresponds to a pump having a pump chamber with a 1200 microliter capacity. As depicted in Figure 4, the pressure attained during the course compression period is 1725 KPa (250.0 psig). The normal flow rate for the pump, if valves were open, which they are not would be 3.0 ml per minute. The period of in which the decay rate slope is calculated is 0.5 minute. The decay rate limit is 2070 KPa (300 psig) per minute.

Thus, features of the present invention have been described with the understanding that the description is an exemplification of the invention and the invention should not be so limited. The invention is described more fully in the claims which follow.

## Claims

1. A pumping apparatus (211) for pumping fluid comprising:
at least two pumping chambers comprising a first pumping chamber (215a) and a second pumping chamber (215b), said first pumping chamber and said second pumping chamber in parallel, with said first pumping chamber receiving fluid from a fluid supply via a first inlet valve (237a) and said second pumping chamber receiving fluid from a fluid supply via a second inlet valve (237b), said first pumping chamber discharging said fluid via a first outlet check valve (239a) and said second pumping chamber discharging said fluid via a second outlet check valve (239b), each pumping chamber an inlet and an outlet and having a piston for movement in said chamber which piston propels fluid from said chamber;
at least one motor (235a, 235) for powering said pistons in said pumping chambers, said motor operating in pumping mode upon receiving a pumping signal;
at least one switchable valve (241) in fluid communication with said outlet of said pumping chamber, said at least one switchable valve having a closed position and an open position, and said at least one switchable valve assuming said closed position upon receiving a close signal;
at least one first pressure measuring device (251a, 251b) in fluid communication with said pumping chambers, between said pumping chambers and said outlet check valves, said at least one pressure measuring device producing a pressure signal in response to pressure;
control means (261) for receiving said pressure signal, for sending a close signal to said at least one switchable valve and for sending a pumping signal to said motor, said control means having a test mode in which said control means send a pumping signal to said motor, send a close signal to said switchable valve to cause said fluid in said chambers to be placed under a pressure, said first pressure measuring device determining a first threshold pressure at a first time and sending a first threshold pressure signal to said control means, said first pressure measuring device determining at least one second threshold pressure at a second time and sending a second threshold pressure signal to said control means, said control means calculating the slope of a line representing the difference of said first threshold pressure signal and said second threshold pressure signal over time and comparing said slope with a threshold value, said threshold value representing a leak in the pump, said control means sending one or more error messages to the operator in response to said slope exceeding said threshold value.

2. The apparatus of claim 1 comprising two pressure measuring devices (251a, 251b) and two motors (235a, 235b), said motors comprising a first motor (235a) mechanically linked to said first pumping chamber (215a) and a second motor (235b) mechanically linked to said second pumping chamber (215b), said two pressure measuring devices comprising a first pressure measuring device (251a) and a second pressure measuring device (251b), said first pressure measuring device (251a) interposed in fluid communication between said first pumping chamber and said first outlet check valve (239a) and said second pressure measuring device (251b) interposed in fluid communication between said seconde pumping chamber and said second outlet check valve (239b), to allow said first pumping chamber and said second pumping chamber to be placed in test mode independent of each other.

3. The apparatus of claim 2 wherein in said test mode said control means (261) directs one of said motors (235a, 235b) to go into pumping mode which places one of said first or second pumping chambers (215a, 215b) under pressure and such apparatus in fluid communication with said pump chamber under pressure through said opposite outlet check valve (239a, 239b), to allow testing of the outlet check valve of the opposite pump chamber.

4. The apparatus of claim 2 wherein in said test mode first one motor (235a, 235b) of one pumping chamber (215a, 215b) is placed in pump mode and then the opposite motor of the opposite pump chamber is placed in pump mode to allow testing of the two outlet check valves (239a, 239b).

5. The apparatus of claim 2 wherein said control means (261) sends a close signal to said outlet check valves (239a, 239b), and said control means receives a first set of pressure values from said first pressure measuring device (251a) and a second set of pressure values from said second pressure measuring device (251b) and compares said values to determine errors in the performance of at least one of the following components selected from the group consisting of said pressure measuring devices (251a, 251b), said first or second pumping chambers (215a, 215b), said first and second inlet valves (237a, 237b) and said outlet check valves (239a, 239b).

6. A method of testing the performance of a pumping apparatus (211) for pumping fluid comprising:
at least two pumping chambers comprising a first pumping chamber (215a) and a second pumping chamber (215b), said first pumping chamber and said second pumping chamber in parallel, with said first pumping chamber receiving fluid from a Quid supply via a first inlet valves (237a) and said second pumping chamber receiving fluid from a fluid supply via a second inlet valve (237b), said first pumping chamber discharging said Quid via a first outlet check valve (239a) and said second pumping chamber discharging said fluid via a second outlet check valve (239b), each pumping chamber having an inlet and an outlet and having a piston for movement in said chamber which piston propels fluid from said chamber;
at least one motor (235a, 235) for powering said pistons in said pumping chambers, said motor operating in pumping mode upon receiving a pumping signal;
at least one switchable valve (241) in fluid communication with said outlets of said pumping chambers, said at least one switchable valve having a closed position and an open position, and said at least one switchable valve assuming said closed position upon receiving a close signal;
at least one first pressure measuring device (251a, 251b) in fluid communication with said pumping chambers, between said pumping chambers and said outlet check valves, said at least one pressure measuring device producing a pressure signal in response to pressure;
control means (261) for receiving said pressure signal, for sending a close signal to said at least one switchable valve and for sending a pumping signal to said motor, said control means having a test mode in which said control means send a pumping signal to said motor, send a close signal to said switchable valve to cause said fluid in said chambers to be placed under a pressure, said first pressure measuring device determining a first threshold pressure at a first time and sending a first threshold pressure signal to said control means, said first pressure measuring device determining at least one second threshold pressure at a second time and sending a second threshold pressure signal to said control means, said control means calculating the slope of a line representing the difference of said first threshold pressure signal and said second threshold pressure signal over time and comparing said slope with a threshold value, said threshold value representing a leak in the pump, said control means sending one or more error messages to the operator in response to said slope exceeding said threshold value;
said method comprising the step of operating said apparatus in test mode.

7. The method of claim 6 wherein said apparatus comprises two pressure measuring devices (251a, 251b) and two motors (235a, 235b), said motors comprising a first motor (235a) mechanically linked to said first pumping chamber (215a) and a second motor (235b) mechanically linked to said second pumping chamber (215b), said two pressure measuring devices comprising a first pressure measuring device (251a) and a second pressure measuring device (251b), said first pressure measuring device (251a) interposed in fluid communication between said first pumping chamber and said first outlet check valve (239a) and said second pressure measuring device (251b) interposed in fluid communication between said second pumping chamber and said second outlet check valve (239b), to allow said first pumping chamber and said second pumping chamber to be placed in test mode independent of each other.

8. The method of claim 7 wherein in said test mode said control means (261) directs one of said motors (235a, 235b) to go into pumping mode which places one of said first or second pumping chambers (215a, 215b) under pressure and such apparatus in fluid communication with said pump chamber under pressure through said opposite outlet check valve (239a, 239b), to allow testing of the outlet check valve of the opposite pump chamber.

9. The method of claim 7 wherein in said test mode first one motor (235a, 235b) of one pumping chamber (215a, 215b) is placed in pump mode and then the opposite motor of the opposite pump chamber is placed in pump mode to allow testing of the two outlet check valves (239a, 239b).

10. The method of claim 7 wherein said control means (261) sends a close signal to said outlet check valves (239a, 239b), and said control means receives a first set of pressure values from said first pressure measuring device (251a) and a second set of pressure values from said second pressure measuring device (251b) and compares said values to determine errors in the performance of at least one of the following components selected from the group consisting of said pressure measuring devices (251a, 251b), said first or second pumping chambers (215a, 215b), said first and second inlet valves (237a, 237b), and said outlet check valves (239a, 239b).

## Patentansprüche

1. Pumpvorrichtung (211) für das Pumpen von Fluid, umfassend:
wenigstens zwei Pumpkammern, die eine erste Pumpkammer (215a) und eine zweite Pumpkammer (215b) umfassen, wobei die erste Pumpkammer und die zweite Pumpkammer parallel sind, wobei die erste Pumpkammer über ein erstes Einlassventil (237a) Fluid von einer Fluidzufuhr aufnimmt und die zweite Pumpkammer über ein zweites Einlassventil (237b) Fluid von einer Fluidzufuhr aufnimmt, wobei die erste Pumpkammer das Fluid über ein erstes Auslassrückschlagventil (239a) abgibt und die zweite Pumpkammer das Fluid über ein zweites Auslassrückschlagventil (239b) abgibt, wobei jede Pumpkammer einen Einlass und einen Auslass aufweist und einen Kolben für die Bewegung in der Kammer aufweist, wobei der Kolben Fluid aus der Kammer befördert;
wenigstens einen Motor (235a, 235b) zum Antreiben der Kolben in den Pumpkammern, wobei der Motor in einem Pumpmodus betrieben wird, sobald ein Pumpsignal empfangen wird;
wenigstens ein Schaltventil (241) in fluider Kommunikation mit den Auslässen der Pumpkammern, wobei das wenigstens eine Schaltventil eine geschlossene Position und eine offene Position aufweist, und wobei das wenigstens eine Schaltventil beim Empfang eines Schließsignals die geschlossene Position einnimmt;
wenigstens eine Druckmessvorrichtung (251a, 251b) in fluider Kommunikation mit den Pumpkammern zwischen den Pumpkammern und den Auslassrückschlagventilen, wobei die wenigstens eine Druckmessvorrichtung ein Drucksignal in Reaktion auf Druck erzeugt;
Steuermittel (261) für den Empfang des Drucksignals, zum Senden eines Schließsignals an das wenigstens eine Schaltventil und zum Senden eines Pumpsignals an den Motor, wobei die Steuermittel einen Testmodus aufweisen, in dem die Steuermittel ein Pumpsignal an den Motor senden, ein Schließsignal an das Schaltventil senden, um zu bewirken, dass das Fluid in den Kammern unter Druck gesetzt wird, wobei die erste Druckmessvorrichtung einen ersten Schwellenwertdruck zu einem ersten Zeitpunkt bestimmt und ein erstes Schwellenwertdrucksignal an die Steuermittel sendet, wobei die erste Druckmessvorrichtung wenigstens einen zweiten Schwellenwertdruck zu einem zweiten Zeitpunkt bestimmt und ein zweites Schwellenwertdrucksignal an die Steuermittel sendet,
wobei die Steuermittel die Steigung einer Linie berechnen, die die Differenz des ersten Schwellenwertdrucksignals und des zweiten Schwellenwertdrucksignals als Funktion der Zeit repräsentiert, und die Steigung mit einem Schwellenwert vergleichen, wobei der Schwellenwert ein Leck in der Pumpe bedeutet, wobei die Steuermittel eine oder mehrere Fehlermeldungen an den Benutzer in Reaktion darauf senden, dass die Steigung größer als der Schwellenwert ist.

2. Vorrichtung nach Anspruch 1, umfassend zwei Druckmessvorrichtungen (251a, 251b) und zwei Motoren (235a, 235b), wobei die Motoren einen ersten Motor (235a) umfassen, der mechanisch mit der ersten Pumpkammer (215a) verknüpft ist, sowie einen zweiten Motor (235b), der mechanisch mit der zweiten Pumpkammer (215b) verknüpft ist, wobei die zwei Druckmessvorrichtungen eine erste Druckmessvorrichtung (251a) und eine zweite Druckmessvorrichtung (251b) umfassen, wobei die erste Druckmessvorrichtung (251a) in fluider Kommunikation zwischen der ersten Pumpkammer und dem ersten Auslassrückschlagventil (239a) angeordnet ist und die zweite Druckmessvornchtung (251b) in fluider Kommunikation zwischen der zweiten Pumpkammer und dem zweiten Auslassrückschlagventil (239b) angeordnet ist, um zu ermöglichen, dass die erste Pumpkammer und die zweite Pumpkammer unabhängig von einander in den Testmodus versetzt werden.

3. Vorrichtung nach Anspruch 2, wobei in dem Testmodus die Steuermittel (261) einen der Motoren (235a, 235b) in den Pumpmodus versetzen, was dazu führt, dass die erste oder die zweite Pumpkammer (215a, 215b) unter Druck gesetzt wird und Apparate in fluider Kommunikation mit dieser Pumpkammer über das andere Auslassrückschlagventil (239a, 239b) unter Druck gesetzt werden, um das Testen des Auslassrückschlagventils der gegenüberliegenden Pumpkammer zu ermöglichen.

4. Vorrichtung nach Anspruch 2, wobei in dem Testmodus zunächst ein Motor (235a, 235b) einer Pumpenkammer (215a, 215b) in den Pumpmodus versetzt wird und dann der andere Motor der anderen Pumpkammer in den Pumpmodus versetzt wird, um das Testen der zwei Auslassrückschlagventile (239a, 239b) zu testen.

5. Vorrichtung nach Anspruch 2, wobei die Steuermittel (261) ein Schließsignal an die Auslassrückschlagventile (239a, 239b) senden und die Steuermittel einen ersten Satz von Druckwerten von der ersten Druckmessvorrichtung (251a) empfangen und einen zweiten Satz von Druckwerten von der zweiten Druckmessvorrichtung (251b) empfangen und die Werte vergleichen, um Betriebsstörungen von wenigstens einer der folgenden Komponenten zu bestimmen, die aus der Gruppe ausgewählt sind, bestehend aus den Druckmessvorrichtungen (251a, 251b), der ersten oder der zweiten Pumpkammer (215a, 215b), dem ersten und dem zweiten Einlassventil (237a, 237b) und den Auslassrückschlagventilen (239a, 239b).

6. Verfahren zum Testen der Leistung einer Pumpvorrichtung (211) zum Pumpen von Fluid, umfassend:
wenigstens zwei Pumpkammern, die eine erste Pumpkammer (215a) und eine zweite Pumpkammer (215b) umfassen, wobei die erste Pumpkammer und die zweite Pumpkammer parallel sind, wobei die erste Pumpkammer über ein erstes Einlassventil (237a) Fluid von einer Fluidzufuhr aufnimmt und die zweite Pumpkammer über ein zweites Einlassventil (237b) Fluid von einer Fluidzufuhr aufnimmt, wobei die erste Pumpkammer das Fluid über ein erstes Auslassrückschlagventil (239a) abgibt und die zweite Pumpkammer das Fluid über ein zweites Auslassrückschlagventil (239b) abgibt, wobei jede Pumpkammer einen Einlass und einen Auslass aufweist und einen Kolben für die Bewegung in der Kammer aufweist, wobei der Kolben Fluid aus der Kammer befördert;
wenigstens einen Motor (235a, 235b) zum Antreiben der Kolben in den Pumpkammern, wobei der Motor in einem Pumpmodus betrieben wird, sobald ein Pumpsignal empfangen wird;
wenigstens ein Schaltventil (241) in fluider Kommunikation mit den Auslässen der Pumpkammern, wobei das wenigstens eine Schaltventil eine geschlossene Position und eine offene Position aufweist, und wobei das wenigstens eine Schaltventil beim Empfang eines Schließsignals die geschlossene Position einnimmt;
wenigstens eine Druckmessvorrichtung (251a, 251b) in fluider Kommunikation mit den Pumpkammern zwischen den Pumpkammern und den Auslassrückschlagventilen, wobei die wenigstens eine Druckmessvorrichtung ein Drucksignal in Reaktion auf Druck erzeugt;
Steuermittel (261) für den Empfang des Drucksignals, zum Senden eines Schließsignals an das wenigstens eine Schaltventil und zum Senden eines Pumpsignals an den Motor, wobei die Steuermittel einen Testmodus aufweisen, in dem die Steuermittel ein Pumpsignal an den Motor senden, ein Schließsignal an das Schaltventil senden, um zu bewirken, dass das Fluid in den Kammern unter Druck gesetzt wird, wobei die erste Druckmessvornchtung einen ersten Schwellenwertdruck zu einem ersten Zeitpunkt bestimmt und ein erstes Schwellenwertdrucksignal an die Steuermittel sendet, wobei die erste Druckmessvorrichtung wenigstens einen zweiten Schwellenwertdruck zu einem zweiten Zeitpunkt bestimmt und ein zweites Schwellenwertdrucksignal an die Steuermittel sendet,
wobei die Steuermittel die Steigung einer Linie berechnen, die die Differenz des ersten Schwellenwertdrucksignals und des zweiten Schwellenwertdrucksignals als Funktion der Zeit repräsentiert, und die Steigung mit einem Schwellenwert vergleichen, wobei der Schwellenwert ein Leck in der Pumpe bedeutet, wobei die Steuermittel eine oder mehrere Fehlermeldungen an den Benutzer in Reaktion darauf senden, dass die Steigung größer als der Schwellenwert ist;
wobei das Verfahren den Schritt des Betreibens der Vorrichtung im Testmodus umfasst.

7. Verfahren nach Anspruch 6, wobei die Vorrichtung zwei Druckmessvorrichtungen (251a, 251b) und zwei Motoren (235a, 235b) umfasst, wobei die Motoren einen ersten Motor (235a) umfassen, der mechanisch mit der ersten Pumpkammer (215a) verknüpft ist, sowie einen zweiten Motor (235b), der mechanisch mit der zweiten Pumpkammer (215b) verknüpft ist, wobei die zwei Druckmessvorrichtungen eine erste Druckmessvorrichtung (251a) und eine zweite Druckmessvorrichtung (251b) umfassen, wobei die erste Druckmessvorrichtung (251a) in fluider Kommunikation zwischen der ersten Pumpkammer und dem ersten Auslassrückschlagventil (239a) angeordnet ist und die zweite Druckmessvorrichtung (251b) in fluider Kommunikation zwischen der zweiten Pumpkammer und dem zweiten Auslassrückschlagventil (239b) angeordnet ist, um zu ermöglichen, dass die erste Pumpkammer und die zweite Pumpkammer unabhängig von einander in den Testmodus versetzt werden.

8. Verfahren nach Anspruch 7, wobei in dem Testmodus die Steuermittel (261) einen der Motoren (235a, 235b) in den Pumpmodus versetzen, was dazu führt, dass die erste oder die zweite Pumpkammer (215a, 215b) unter Druck gesetzt wird und Apparate in fluider Kommunikation mit dieser Pumpkammer über das andere Auslassrückschlagventil (239a, 239b) unter Druck gesetzt werden, um das Testen des Auslassrückschlagventils der gegenüberliegenden Pumpkammer zu ermöglichen.

9. Verfahren nach Anspruch 7, wobei in dem Testmodus zunächst ein Motor (235a, 235b) einer Pumpenkammer (215a, 215b) in den Pumpmodus versetzt wird und dann der andere Motor der anderen Pumpkammer in den Pumpmodus versetzt wird, um das Testen der zwei Auslassrückschlagventile (239a, 239b) zu testen.

10. Verfahren nach Anspruch 7, wobei die Steuermittel (261) ein Schließsignal an die Auslassrückschlagventile (239a, 239b) senden und die Steuermittel einen ersten Satz von Druckwerten von der ersten Druckmessvorrichtung (251a) empfangen und einen zweiten Satz von Druckwerten von der zweiten Druckmessvorrichtung (251b) empfangen und die Werte vergleichen, um Betriebsstörungen von wenigstens einer der folgenden Komponenten zu bestimmen, die aus der Gruppe ausgewählt sind, bestehend aus den Druckmessvorrichtungen (251a, 251b), der ersten oder der zweiten Pumpkammer (215a, 215b), dem ersten und dem zweiten Einlassventil (237a, 237b) und den Auslassrückschlagventilen (239a, 239b).

## Revendications

1. Dispositif de pompage (211) pour pomper un fluide, comprenant :
au moins deux chambres de pompage comprenant une première chambre de pompage (215a) et une deuxième chambre de pompage (215b), ladite première chambre de pompage et ladite deuxième chambre de pompage en parallèle, ladite première chambre de pompage recevant du fluide d'une source de fluide via un premier clapet d'entrée (237a) et ladite deuxième chambre de pompage recevant du fluide d'une source de fluide via un second clapet d'entrée(237b), ladite première chambre de pompage refoulant ledit fluide un premier clapet anti-retour de sortie (239a) et ladite deuxième chambre de pompage refoulant ledit fluide via un second clapet anti-retour de sortie (239b), chaque chambre de pompage ayant une entrée et une sortie et ayant un piston destiné à se mouvoir dans ladite chambre, lequel piston expulse du fluide depuis ladite chambre ;
au moins un moteur électrique (235a, 235) pour actionner lesdits pistons dans lesdites chambres de pompage, ledit moteur fonctionnant en mode pompage à la réception d'un signal de pompage ;
au moins un clapet inversable (241) en communication fluidique avec lesdites sorties desdites chambres de pompage, ledit au moins un clapet inversable ayant une position fermée et une position ouverte, et ledit au moins un clapet inversable se plaçant dans ladite position fermée à la réception d'un signal de fermeture ;
au moins un dispositif de mesure de pression (251a, 251b) en communication fluidique avec lesdites chambres de pompage, entre lesdites chambres de pompage et lesdits clapets anti-retour de sortie, ledit au moins un dispositif de mesure de pression produisant un signal de pression en réponse à la pression ;
un moyen de commande (261) pour recevoir ledit signal de pression, pour envoyer un signal de fermeture audit au moins un clapet inversable et pour envoyer un signal de pompage audit moteur, ledit moyen de commande ayant un mode contrôle dans lequel ledit moyen de commande envoie un signal de pompage audit moteur, envoie un signal de fermeture audit clapet inversable pour amener ledit fluide dans lesdites chambres à être mis sous pression, ledit premier dispositif de mesure de pression déterminant un premier seuil de pression à un premier instant et envoyant un signal de premier seuil de pression audit moyen de commande, ledit premier dispositif de mesure de pression déterminant au moins un deuxième seuil de pression à un deuxième instant et envoyant un signal de deuxième seuil de pression audit moyen de commande, ledit moyen de commande calculant la pente d'une droite représentant la différence, dans le temps, entre ledit signal de premier seuil de pression et ledit signal de deuxième seuil de pression et comparant ladite pente avec une valeur seuil, ladite valeur seuil représentant une fuite dans la pompe, ledit moyen de commande envoyant un ou plusieurs messages d'erreurs à l'opérateur en réponse au dépassement de ladite valeur seuil par ladite pente.

2. Dispositif selon la revendication 1, comprenant deux dispositifs de mesure de pression (251a, 251b) et deux moteurs électriques (235a, 235b), lesdits moteurs comprenant un premier moteur (235a) accouplé mécaniquement avec ladite première chambre de pompage (215a) et un second moteur (235b) accouplé mécaniquement avec ladite deuxième chambre de pompage (215b), lesdits deux dispositifs de mesure de pression comprenant un premier dispositif de mesure de pression (251a) et un second dispositif de mesure de pression (251b), ledit premier dispositif de mesure de pression (251a) étant intercalé en communication fluidique entre ladite première chambre de pompage et ledit premier clapet anti-retour de sortie (239a) et ledit second dispositif de mesure de pression (251b) étant intercalé en communication fluidique entre ladite deuxième chambre de pompage et ledit second clapet anti-retour de sortie (239b), pour permettre à ladite première chambre de pompage et à ladite deuxième chambre de pompage d'être mises en mode contrôle indépendamment l'une de l'autre.

3. Dispositif selon la revendication 2, dans lequel, dans ledit mode contrôle, ledit moyen de commande (261) demande à l'un desdits moteurs (235a, 235b) de passer en mode pompage, ce qui met l'une desdites première et deuxième chambres de pompage (215a, 215b) sous pression et ledit dispositif en communication fluidique avec ladite chambre de pompage sous pression via ledit clapet anti-retour de sortie opposé (239a, 239b), pour permettre de contrôler le clapet anti-retour de sortie de la chambre de pompage opposée.

4. Dispositif selon la revendication 2, dans lequel, dans ledit mode contrôle, tout d'abord un premier moteur (235a, 235b) d'une première chambre de pompage (215a, 215b) est mis en mode pompage, puis le moteur opposé de la chambre de pompage opposée est mis en mode pompage pour permettre le contrôle des deux clapets anti-retour de sortie (239a, 239b).

5. Dispositif selon la revendication 2, dans lequel ledit moyen de commande (261) envoie un signal de fermeture auxdits clapets anti-retour de sortie (239a, 239b) et ledit moyen de commande reçoit, dudit premier dispositif de mesure de pression (251a), un premier ensemble de valeurs de pression et, dudit second dispositif de mesure de pression (251b), un second ensemble de valeurs de pression et compare lesdites valeurs afin de déterminer des erreurs dans le fonctionnement d'au moins un des organes suivants, choisis dans le groupe composé desdits dispositifs de mesure de pression (251a, 251b), lesdites première ou seconde chambres de pompage (215a, 215b), lesdits premier et second clapets d'entrée (237a, 237b) et lesdits clapets anti-retour de sortie (239a, 239b).

6. Procédé de contrôle des performances d'un dispositif de pompage (211) pour pomper un fluide comprenant :
au moins deux chambres de pompage comprenant une première chambre de pompage (215a) et une deuxième chambre de pompage (215b), ladite première chambre de pompage et ladite deuxième chambre de pompage en parallèle, ladite première chambre de pompage recevant du fluide d'une source de fluide via un premier clapet d'entrée (237a) et ladite deuxième chambre de pompage recevant du fluide d'une source de fluide via un second clapet d'entrée(237b), ladite première chambre de pompage refoulant ledit fluide un premier clapet anti-retour de sortie (239a) et ladite deuxième chambre de pompage refoulant ledit fluide via un second clapet anti-retour de sortie (239b), chaque chambre de pompage ayant une entrée et une sortie et ayant un piston destiné à se mouvoir dans ladite chambre, lequel piston expulse du fluide depuis ladite chambre ;
au moins un moteur électrique (235a, 235) pour actionner lesdits pistons dans lesdites chambres de pompage, ledit moteur fonctionnant en mode pompage à la réception d'un signal de pompage ;
au moins un clapet inversable (241) en communication fluidique avec lesdites sortie desdites chambres de pompage, ledit au moins un clapet inversable ayant une position fermée et une position ouverte, et ledit au moins un clapet inversable se plaçant dans ladite position fermée à la réception d'un signal de fermeture ;
au moins un premier dispositif de mesure de pression (251a, 251b) en communication fluidique avec lesdites chambres de pompage, entre lesdites chambres de pompage et lesdits clapets anti-retour de sortie, ledit au moins un dispositif de mesure de pression produisant un signal de pression en réponse à la pression ;
un moyen de commande (261) pour recevoir ledit signal de pression, pour envoyer un signal de fermeture audit au moins un clapet inversable et pour envoyer un signal de pompage audit moteur, ledit moyen de commande ayant un mode contrôle dans lequel ledit moyen de commande envoie un signal de pompage audit moteur, envoie un signal de fermeture audit clapet inversable pour amener ledit fluide dans lesdites chambres à être mis sous pression, ledit premier dispositif de mesure de pression déterminant un premier seuil de pression à un premier instant et envoyant un signal de premier seuil de pression audit moyen de commande, ledit premier dispositif de mesure de pression déterminant au moins un deuxième seuil de pression à un deuxième instant et envoyant un signal de deuxième seuil de pression audit moyen de commande, ledit moyen de commande calculant la pente d'une droite représentant la différence, dans le temps, entre ledit signal de premier seuil de pression et ledit signal de deuxième seuil de pression et comparant ladite pente avec une valeur seuil, ladite valeur seuil représentant une fuite dans la pompe, ledit moyen de commande envoyant un ou plusieurs messages d'erreurs à l'opérateur en réponse au dépassement de ladite valeur seuil par ladite pente ;
ledit procédé comprenant l'étape consistant à faire fonctionner ledit dispositif en mode contrôle.

7. Procédé selon la revendication 6, dans lequel ledit dispositif comprend deux dispositifs de mesure de pression (251a, 251b) et deux moteurs électriques (235a, 235b), lesdits moteurs comprenant un premier moteur (235a) accouplé mécaniquement avec ladite première chambre de pompage (215a) et un second moteur (235b) accouplé mécaniquement avec ladite deuxième chambre de pompage (215b), lesdits deux dispositifs de mesure de pression comprenant un premier dispositif de mesure de pression (251a) et un second dispositif de mesure de pression (251b), ledit premier dispositif de mesure de pression (251a) étant intercalé en communication fluidique entre ladite première chambre de pompage et ledit premier clapet anti-retour de sortie (239a) et ledit second dispositif de mesure de pression (251b) étant intercalé en communication fluidique entre ladite deuxième chambre de pompage et ledit second clapet anti-retour de sortie (239b), pour permettre à ladite première chambre de pompage et à ladite deuxième chambre de pompage d'être mises en mode contrôle indépendamment l'une de l'autre.

8. Procédé selon la revendication 7, dans lequel, dans ledit mode contrôle, ledit moyen de commande (261) demande à l'un desdits moteurs (235a, 235b) de passer en mode pompage, ce qui met l'une desdites première et deuxième chambres de pompage (215a, 215b) sous pression et ledit dispositif en communication fluidique avec ladite chambre de pompage sous pression via ledit clapet anti-retour de sortie opposé (239a, 239b), pour permettre de contrôler le clapet anti-retour de sortie de la chambre de pompage opposée.

9. Procédé selon la revendication 7, dans lequel, dans ledit mode contrôle, tout d'abord un premier moteur (235a, 235b) d'une première chambre de pompage (215a, 215b) est mis en mode pompage, puis le moteur opposé de la chambre de pompage opposée est mis en mode pompage pour permettre le contrôle des deux clapets anti-retour de sortie (239a, 239b).

10. Procédé selon la revendication 7, dans lequel ledit moyen de commande (261) envoie un signal de fermeture auxdits clapets anti-retour de sortie (239a, 239b) et ledit moyen de commande reçoit, dudit premier dispositif de mesure de pression (251a), un premier ensemble de valeurs de pression et, dudit second dispositif de mesure de pression (251b), un second ensemble de valeurs de pression et compare lesdites valeurs afin de déterminer des erreurs dans le fonctionnement d'au moins un des organes suivants, choisis dans le groupe composé desdits dispositifs de mesure de pression (251a, 251b), lesdites première ou seconde chambres de pompage (215a, 215b), lesdits premier et second clapets d'entrée (237a, 237b) et lesdits clapets anti-retour de sortie (239a, 239b).
